# EUROPEAN PATENT SPECIFICATION

(11) **EP 3 967 536 B1**
(45) Date of publication and mention of the grant of the patent: **12.11.2025**
(21) Application number: 20801741.8
(22) Date of filing: 06.05.2020
(51) Int. Cl.: B60K 17/34, B62D 61/12, B60K 23/08

(54) **DRIVE SHAFT FOR A VEHICLE WITH A FIRST AXLE AND A SECOND AXLE THAT IS A LIFTING AXLE**
ANTRIEBSWELLE FÜR EIN FAHRZEUG MIT EINER ERSTEN ACHSE UND EINER ZWEITEN ACHSE, DIE EINE HEBEACHSE IST
ARBRE DE TRANSMISSION POUR UN VÉHICULE COMPRENANT UN PREMIER AXE ET UN SECOND AXE QUI PEUT ÊTRE ÉLEVÉ

(30) Priority: 08.05.2019 BR 102019009377
(43) Date of publication of application: 16.03.2022
(73) Proprietor: IVECO S.P.A., 10156 Torino (IT)
(72) Inventor: LIMA NETO, Bernardo da Costa, 35702-508 Sete Lagoas - MG (BR); DE SÁ, Thiago Malaquias Domingos, 32240-690 Contagem - MG (BR)
(74) Representative: Studio Torta S.p.A.
(86) International application number: PCT/BR2020/050152
(87) International publication number: WO 2020/223779

(56) References cited:
- WO-A1-2008/077603
- WO-A1-2015/080722
- DE-A1- 102006 060 842
- US-A- 2 477 925
- US-A1- 2012 260 758
- US-A1- 2018 222 317
- US-B2- 10 274 069
- US-B2- 9 073 432
- US-B2- 9 381 806

## Description

### Field of Invention

The present invention relates to work vehicles and, more specifically, to a drive shaft for a work vehicle.

### Background

A work vehicle, such as a large truck or tractor, usually includes a chassis, an engine to provide a driving force, a transmission, and a drive system that includes at least three axles to increase the payload and towing capacity of the work vehicle. For example, the work vehicle may include a front steering axle and a pair of rear tandem axles. The work vehicle may have multiple drive configurations, i.e., such as a 6x2, 6x4, 6x6, 8x4, 8x8, or 10x8 drive configuration, in order to selectively drive one or more of the rear axles. For example, a work vehicle with a 6x4 drive configuration may include an undriven steerable front axle and a pair of rear axles that are driven by the engine. In some circumstances, for example, when towing a heavy load uphill, it may be desirable to provide a driving force to all three axles of the work vehicle in a 6x6 drive configuration to increase traction. In other circumstances, for example, when driving the work vehicle in a non-trailer operation, it may be desirable to drive only one of the axles, in a 6x2 drive configuration, to decrease traction and increase fuel efficiency.

In some work vehicles, one of the rear axles may be a lifting axle, which may be disengaged and raised to raise the wheels of the lifting axle above the road in order to operate the work vehicle in a 6x2 drive configuration. Consequently, the operator can raise the lifting axle when the work vehicle does not need an additional load or towing capacity, thereby increasing fuel efficiency, decreasing wear on the elevated wheels and/or improving manoeuvrability. The lifting axle assembly typically includes a lifting member, such as an air spring, for raising the lifting axle and a decoupling member for disengaging driving force from the raised lifting axle.

A typical decoupling member may include clutches, for example, toothed clutches and/or a selectively engageable drive shaft. For example, US2012/0260758 A1 discloses a decoupling member that includes multiple disc clutches and actuators controlled by an electronic control unit. Additionally, for example, US 2018/0222317 A1 discloses a pneumatically actuated drive shaft with a left drive shaft, a right drive shaft, and an inner sleeve that couples or uncouples the left and right drive shafts. However, such decoupling members from the prior art can be complex and expensive.

Other examples known in the art are shown in publications DE102006060842 A1 or EO2015/080722 A1.

What is required in the technique is a cost-effective propeller shaft to uncouple a lifting axle.

### Description of the Invention

The aforementioned aims are reached by a drive shaft and a vehicle as claimed of the appended set of claims.

Thanks to the claimed drive shaft, the drive shaft reduces construction costs and operational wear since this kind of drive shaft mechanically couples and uncouples each drive shaft member by the movement of the lifting axle as it is lowered or raised from the ground, respectively.

### Brief Description of the Figures

For the purpose of illustration, the Figures show certain embodiments of the present invention. It should be understood, however, that the invention is not limited to the precise arrangements, dimensions and instruments shown. Similar numbers indicate similar elements throughout the Figures. In the Figures:
- Figure 1 illustrates a side view of an embodiment of a work vehicle, the work vehicle comprising a rear tandem axle assembly according to an embodiment of the present invention;
- Figure 2 illustrates a side view of the tandem axle assembly of Figure 1, which includes a variable length drive shaft between the pair of rear axles, in which the rearmost axle is flush with the foremost tandem axle;
- Figure 3 illustrates another side view of the tandem axle assembly of Figure 1, in which the rearmost axle is elevated above the ground;
- Figure 4 illustrates a perspective view of the drive shaft of Figures 2 to 3;
- Figure 5 illustrates an exploded view of the drive shaft of Figures 2 to 4;
- Figure 6 illustrates a cross-sectional view of the drive shaft in an extended and engaged position to transmit driving force between the tandem shafts; and
- Figure 7 illustrates another cross-sectional view of the drive shaft in a retracted and disengaged position for stopping the transmission of driving force between the tandem shafts.

### Description of the Achievements of the Invention

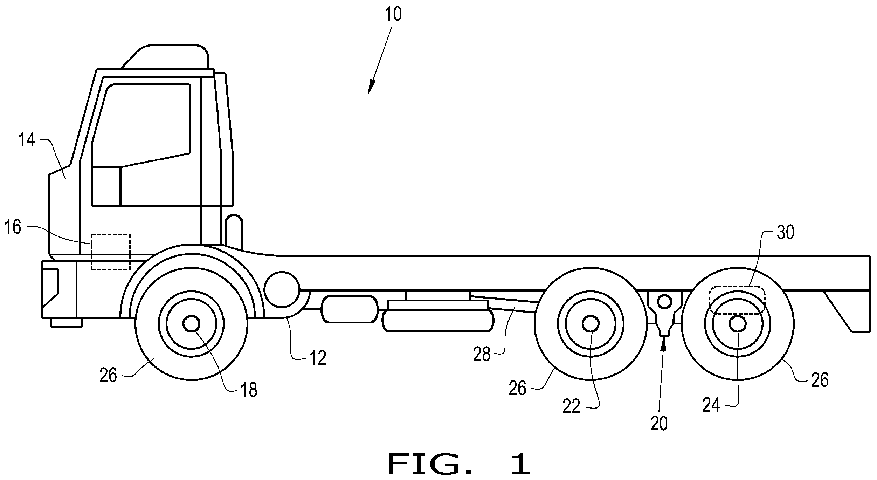

Referring now to the Figures, and more particularly to Figures 1 to 3, a work vehicle 10 is shown which typically includes a chassis 12, a cab 14 for an operator, a main drive 16, for example a diesel engine 16, a front axle 18, a rear axle assembly 20 with at least two axles 22, 24, wheels 26 attached to the axles 18, 22, 24, and a drive system including a transmission, accompanying gearbox(es), and a main drive shaft 28 for transmitting driving force, i.e., drive torque, from the engine 16 to the rear axle assembly 20 to provide primary traction for the work vehicle 10. The front wheels 26 of the front axle 18 are normally configured to be steered to provide directional control for the work vehicle 10. The engine 16, via the transmission system, may drive the wheels 26 of any axle 18, 22, 24. The work vehicle 10 may include more than three axles. The work vehicle 10 may have any desired drive configuration, such as a 6x6, 6x4, 6x2, 8x8, 8x4, 10x8, or 10x6 drive configuration. The work vehicle 10 may be in the form of any desired vehicle 10, such as a truck or bus.

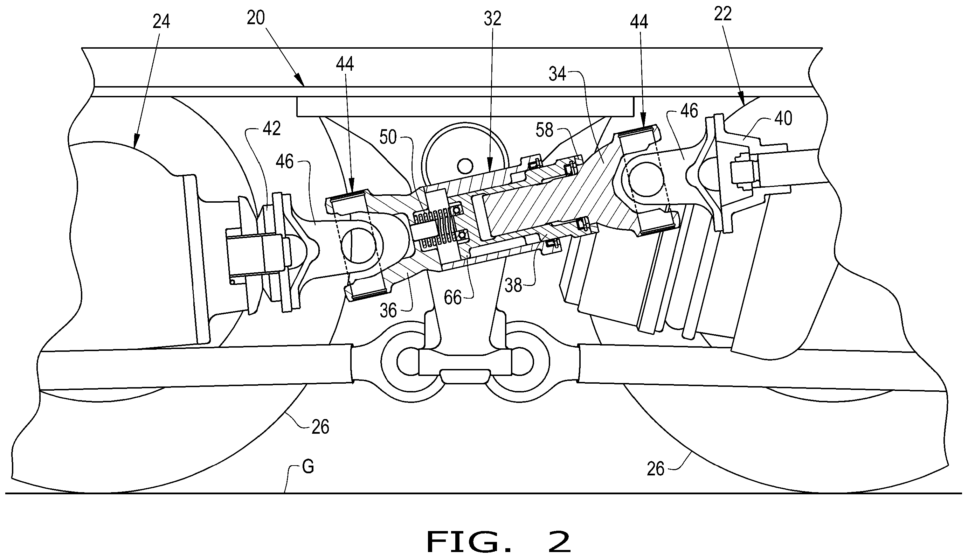

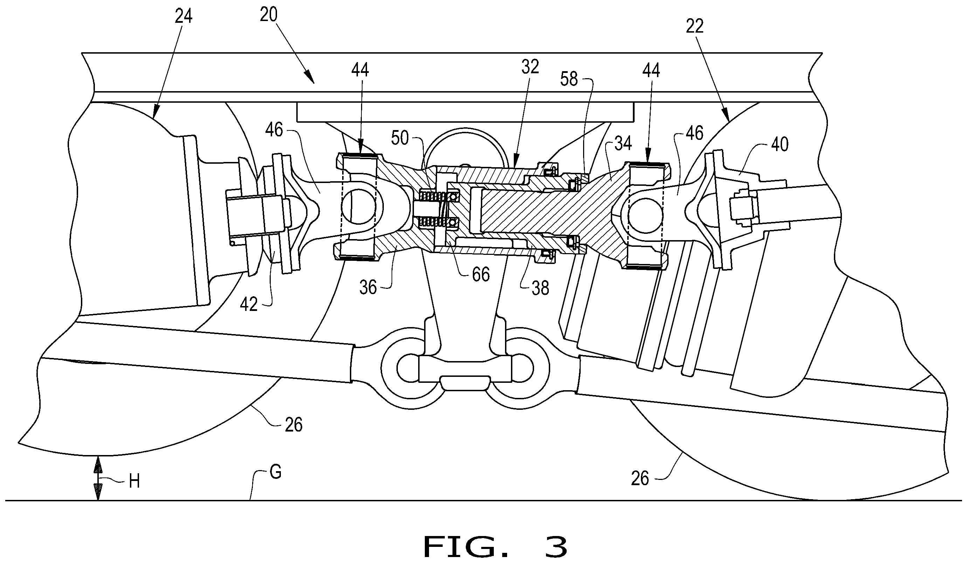

The rear axle assembly 20 may be a lifting axle assembly 20 such that one of the axles 22, 24 is selectively liftable from the ground G, by a height H, and can be disengaged from the engine 16 (see Figure 3). In this way, the work vehicle 10 can be transformed from a 6x4 drive configuration into a 6x2 drive configuration by lifting one of the rear axles 22, 24. In this regard, the rear axle assembly 20 may additionally include a lifting member 30, for example an air bag 30, for lifting the second axle 24 and a drive shaft 32 that can be disengaged in order to disengage the second axle 24 from the driving force provided by the engine 16. The lifting member 30 can either lower the rear axle 24 into an active or down position so that the wheels 26 of the rear axle 24 contact the ground G (see Figure 2) or raise the rear axle 24 in an up position so that the wheels 26 of the rear axle 24 do not contact the ground G (see Figure 3). Consequently, the rear axle assembly 20 may improve fuel economy, reduce wear on the wheels 26 of the rearmost axle 24, and shorten the wheelbase of the work vehicle 10 to improve manoeuvrability. It is possible for the rear axle assembly 20 to be configured to raise the first axle 22 instead of the second axle 24.

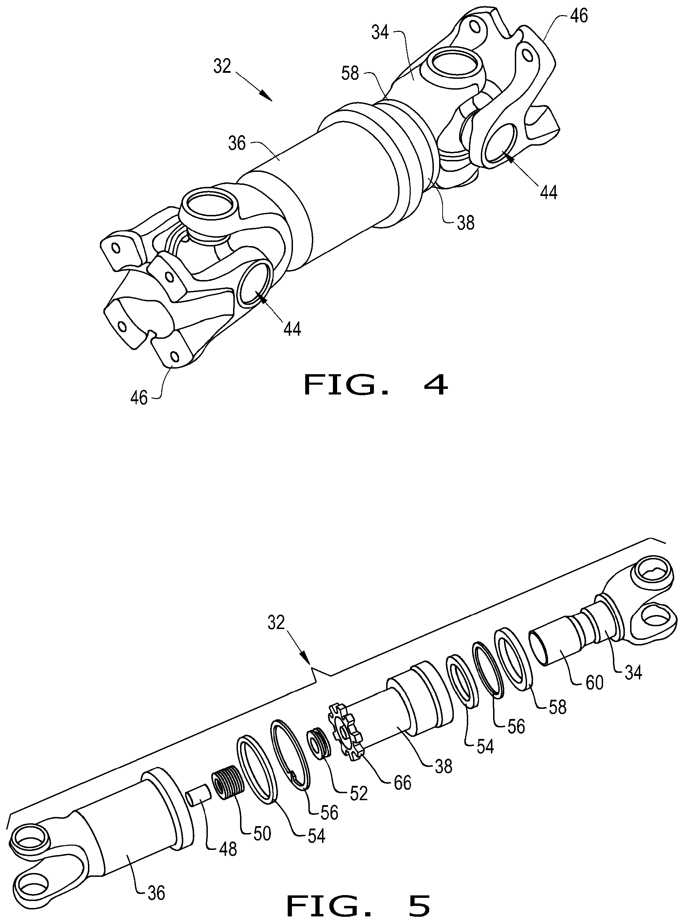

Referring collectively now to Figures 2 to 7, the rear drive shaft 32 extends between and selectively couples the tandem rear axles 22, 24, in order to selectively distribute driving force, i.e., drive torque between the rear axles 22, 24. The rear drive shaft 32 may be in the form of any desired shaft, such as a multi-part variable length drive shaft 32. The rear drive shaft 32 may typically include a first drive shaft member 34 that is operatively connected to the first axle 22, a second drive shaft member 36 that is operatively connected to second axle 24, and a sliding coupler 38 that is positioned between and mechanically (dis)connects the first and second drive shaft members 34, 36. Each drive shaft member 34, 36 may be operatively connected to a respective gearbox 40, 42 of each rear axle 22, 24 by means of a respective universal joint 44 and flange 46. The rear drive shaft 32 may also include a guide pin 48, a tension member 50, an axial bearing 52, at least two retainers 54, at least two external retaining rings 56, and a mechanical stop washer 58 (see Figure 5).

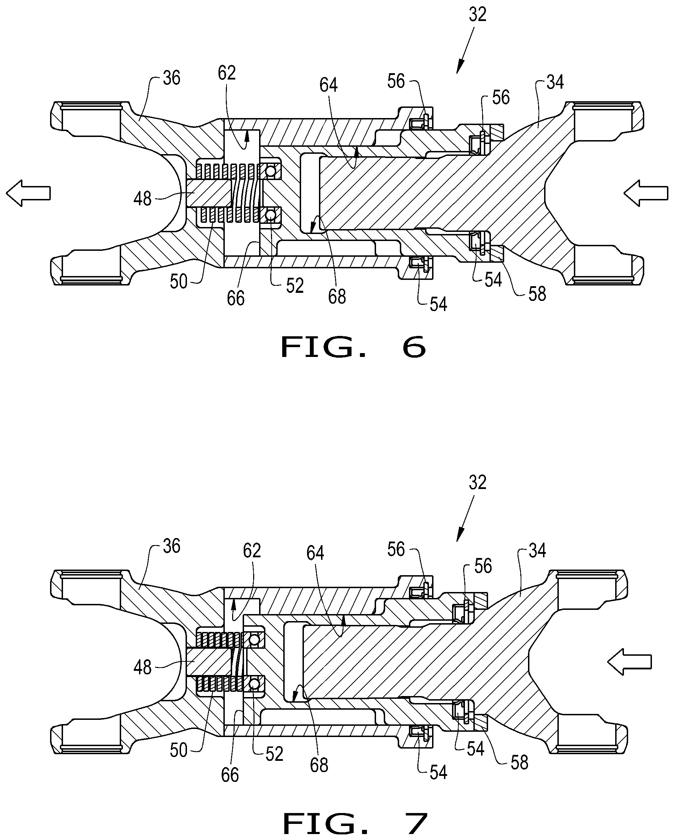

The lifting and lowering movement of the rearmost axle 24 automatically varies the length of the rear drive shaft 32. For example, when the rear axle 24 is raised in its up position, the rear drive shaft 32 retracts, i.e. shortens, into a retracted position and the sliding coupler 38 automatically disconnects the first and second shaft members 34, 36 (see Figures 3 and 7). When the rear axle 24 is lowered in its down position, the rear drive shaft 32 extends, i.e., lengthens, into an extended position and the sliding coupler 38 automatically connects the first and second shaft members 34, 36 (see Figures 2 and 6). In other words, the sliding coupler 38 mechanically couples the first and second drive shaft members 34, 36 together in the elongated position (see Figures 2 and 6) and, consequently, the driving force of the first drive shaft member 34 is transmitted by the sliding coupler 38 so that the first drive shaft member 34, the second drive shaft member 36, and the sliding coupler 38 rotate together to drive the wheels 26 of both rear axles 22, 24. Furthermore, the sliding coupler 38 mechanically decouples the first and second drive shaft members 34, 36 in the retracted position (see Figures 3 and 7) and consequently stops transmitting the driving force to the rearmost axle 24 so that the first drive shaft member 34 and the sliding coupler 38 rotate together, but the second drive shaft member 36 does not rotate together with them. Therefore, the sliding coupler 38 automatically and selectively couples the first and second drive shaft members 34, 36 based on movement of the lifting axle 24. In this way, the sliding coupler 38 transmits driving force between the first and second drive shaft members 34, 36 due to the mechanical connection of the sliding coupler 38 to the first and second drive shaft members 34, 36, the orientation of the rear drive shaft 32, and the movement of the lifting axle 24 as it raises or lowers in the resulting drive configuration.

The first drive shaft member 34, for example, a male sliding drive shaft member 34, is operatively coupled with the first 22 and the second drive shaft member 36. The first drive shaft member 34 has a forked end that operatively connects to the first axle 22 and another male cylindrical end that at least partially fits within the sliding coupler 38. The first drive shaft member 34 may include a locking function 60, for example in the form of tabs 60 around the circumference of the cylindrical end. The locking function 60 may engage with the sliding coupler 38. It is possible to see that the first drive shaft member 34 may not include a locking function. Alternatively, the first drive shaft member 34 may be welded to the sliding coupler 38.

The second drive shaft member 36, for example a female sliding sleeve member 36, is operatively coupled with the second axle 24 and the first drive shaft member 34. The second drive shaft member 36 has a forked end that operatively connects to the second axle 24, an open end, and an inner recess 62 (see Figures 6 to 7). The inner recess 62 at least partially houses the sliding coupler 38 and the first drive shaft member 34 engaged within the sliding coupler 38. The inner recess 62 may include a locking function 64 that engages with the sliding coupler 38 (see Figures 6 to 7). For example, the locking function 64 of the inner recess 62 may be in the form of tabs 64 that are spaced circumferentially around the inner diameter of the inner recess 62.

The sliding coupler 38 is connected between the first and second drive shaft members 34, 36. The sliding coupler 38 may be in the form of a sleeve 38 that includes an end that couples to the first drive shaft member 34, another end with a locking function 66, an intermediate section interconnected between the ends, and an inner recess 68 that receives at least a portion of the first drive shaft member 34 (see Figures 5 to 7). The locking function 66 mechanically and selectively couples to the locking function 64 of the inner recess 62 of the second drive shaft member 36, in order to selectively transmit the driving force between the first and second drive shaft members 34, 36. The locking function 66 of the sliding coupler 38 may be in the form of teeth 66, which extend around the outer diameter of the end that is adjacent to the second drive shaft member 36. The locking function 66 of the sliding coupler 38 may slide axially in and out of the tabs 64 of the second drive shaft member 36 to mechanically couple and uncouple the first and second drive shaft members 34, 36. Throughout the sliding motion of the second drive shaft member 36 and/or the sliding coupler 38 between the extended and retracted positions of the rear drive shaft 32, the teeth 66 of the sliding coupler may remain within the inner recess 62 of the second drive shaft member 36. At least a portion of the intermediate section of the sliding coupler 38 selectively contacts the inner recess 62 of the second drive shaft member 36 to perform the function of a mechanical stop to prevent the sliding coupler 38 from additionally sliding into the inner recess 62 of the second drive shaft member 36. It can be seen that the second drive shaft member 36 and the sliding coupler 38 may slide axially relative to each other, the second drive shaft member 36 may remain stationary and the sliding coupler 38 may slide relative to the second drive shaft member 36, and/or the sliding coupler 38 may remain stationary and the second drive shaft member 36 may slide relative to the sliding coupler 38. In addition, the sliding coupler 38 may also slide relative to the first drive shaft member 34.

The guide pin 48 may be connected between the end of the sliding coupler 38 and the inner recess 62 of the second drive shaft member 36. The guide pin 48 may fit within a division in the inner recess 62 or a receiver hole extending through the outer wall of the second drive shaft member 36 and into the inner recess 62. The guide pin 48 may be concentric with the tension member 50.

The tension member 50 may be connected between an end of the sliding coupler 38 and the inner recess 62 of the second drive shaft member 36. The tension member 50 tightens the sliding coupler 38 to mechanically couple the first and second drive shaft members 34, 36. The tension member 50 may be in the form of any desired tension member, such as a spiral spring 50.

The axial bearing 52 may be connected between the tension member 50 and the end of the sliding coupler 38. The axial bearing 52 may be held within a designated space, for example, an annular division (unnumbered) within the sliding coupler 38. The axial bearing 52 may be in the form of any desired bearing.

An external retaining ring 56 may be connected between the first drive shaft member 34 and one end of the sliding coupler. Another external retaining ring 56 may be connected between the second drive shaft member 36 and the intermediate section of the sliding coupler 38. Each external retaining ring 56 may comprise any desired material, such as metal, rubber, or plastic. Each retainer 54 may cover a respective external retaining ring 56. Each retainer 54 may comprise any suitable material, such as metal, rubber, or plastic.

The mechanical stop washer 58 may be connected between the first drive shaft member 34 and the sliding coupler 38 to retain at least a portion of the first drive shaft member 34 within the sliding coupler 38. The mechanical stop washer 58 may comprise any desired material, such as metal, rubber, or plastic.

These and other advantages of the present invention will be apparent to those skilled in the art from the above descriptive report. Consequently, it will be recognized by those skilled in the art that changes or modifications may be made to the above described embodiments without departing from scope of the invention as claimed in the appended set of claims.

## Claims

1. A drive shaft (32) for a vehicle (10) with a first axle (22) and a second axle (24) that lifts in which the drive shaft (32) comprises:
a first drive shaft member (34) configured to connect to the first axle (22);
a second drive shaft member (36) configured to connect to the second axle (24), wherein the second drive shaft member (36) has an inner recess (62) that at least partially houses the first drive shaft member (34); and
a sliding coupler (38) connected between the first drive shaft member (34) and the second drive shaft member (36),
**characterized by** the fact that:
the sliding coupler (38) has a first end that couples to the first drive shaft member (34) and a second end with a locking function (66) to mechanically couple with the inner recess (62) of the second drive shaft member (36), in order to selectively transmit a driving force between the first and second drive shaft members (34, 36).

2. The drive shaft according to claim 1, wherein the first drive shaft member (34) receives the driving force so that the sliding coupler (38) mechanically couples the first and second drive shaft members (34, 36) together in the extended position and transmits the driving force so that the first drive shaft member (34), the second drive shaft member (36), and the sliding coupler (38) rotate together in tandem, and the sliding coupler (38) mechanically disengages the first and second drive shaft members (34, 36) in the retracted position and stops transmitting the driving force so that the first drive shaft member (34) and the sliding coupler (38) rotate together but the second drive shaft member (36) does not rotate together with them.

3. The drive shaft according to claim 1 or 3, wherein the inner recess (62) at least partially houses the sliding coupler (38) and the first drive shaft member (34), and the inner recess (62) of the second drive shaft member (36) comprises a locking function (64) such that the locking function (66) of the second end of the sliding coupler (38) mechanically and selectively engages with the locking function (64) of the inner recess (62) of the second drive shaft member (36).

4. The drive shaft according to claim 3, wherein the locking function (64) of the inner recess (62) is in the form of tabs (64).

5. The drive shaft according to claim 4, wherein the locking function (66) of the sliding coupler (38) is in the form of teeth (66).

6. The drive shaft according to claim 6, wherein the second drive shaft member (36) and the sliding coupler (38) slide axially relative to each other so that the locking function (66) of the sliding coupler (38) slide axially on the tabs (64) of the second drive shaft member (36) to mechanically couple the first and second drive shaft members (34, 36) and the teeth (66) slide axially out and away from the tabs (64) of the second drive shaft member (36) but remain within the inner recess (62) of the second drive shaft member (36) to mechanically uncouple the first and second drive shaft members (34, 36).

7. The drive shaft according to any of the preceding claims, wherein the sliding coupler (38) is in the form of a sleeve (38) which additionally comprises an intermediate section connected between the first end and the second end and an inner recess (68) which receives at least a portion of the first drive shaft member (34).

8. The drive shaft according to claim 7, wherein the intermediate section of the sliding coupler (38) selectively contacts the inner recess (62) of the second drive shaft member (36) to perform a function of a mechanical stop to prevent the sliding coupler (38) from additionally sliding outwardly in the inner recess (62) of the second drive shaft member (36).

9. The drive shaft according to any of the preceding claims, further comprising a tension member (50) connected between the second end of the sliding coupler (38) and the inner recess (62) of the second drive shaft member (36), and the tension member (50) tightens the sliding coupler (38) to mechanically couple the first and second drive shaft members (34, 36).

10. The drive shaft according to claim 9, wherein the tension member (50) is a spring (50).

11. The drive shaft according to any one of claims 9 or 10, further comprising a guide pin (48) connected between the second end of the sliding coupler (38) and the inner recess (62) of the second drive shaft member (36), and the guide pin (48) is concentric with the tension member (50).

12. The drive shaft according to any one of claims 9 to 11, further comprising an axial bearing (52) connected between the tension member (50) and the second end of the sliding coupler (38).

13. The drive shaft according to any one of the preceding claims, further comprising a first external retaining ring (56) connected between the first drive shaft member (34) and the first end of the sliding coupler (38) and a second external retaining ring (56) connected between the second drive shaft member (36) and the sliding coupler (38).

14. The drive shaft according to any one of the preceding claims, further comprising a mechanical stop washer (58) connected between the first drive shaft member (34) and the first end of the sliding coupler (38) and a second external retaining ring (56) connected between the second drive shaft member (36) and the sliding coupler (38).

15. A vehicle comprising a drive shaft (32) according to any of the preceding claims and a lifting member (30) operatively connected to the second axle (24) to raise or lower the second axle (24), and the drive shaft (32) is configured to have a variable length so that the first and second drive shaft members (34, 36) move relative to each other between an extended position in which the length of the drive shaft (32) is extended and the second axle (24) is approximately level with the first axle (22), and a retracted position in which the length of the drive shaft (32) is retracted and the second axle (24) is raised relative to the first axle (22), and the sliding coupler (38) automatically engages the first and second drive shaft members (34, 36) in the extended position and disengages the first and second drive shaft members (34, 36) in the retracted position.

## Patentansprüche

1. Eine Antriebswelle (32) für ein Fahrzeug (10) mit einer ersten Achse (22) und einer zweiten, anhebbaren Achse (24), wobei die Antriebswelle (32) umfasst:
ein erstes Antriebswellen-Element (34), das eingerichtet ist, die erste Achse (22) zu verbinden;
ein zweites Antriebswellen-Element (36), das eingerichtet ist, die zweite Achse (24) zu verbinden, wobei das zweite Antriebswellen-Element (36) eine innere Ausnehmung (62) aufweist, die das erste Antriebswellen-Element (34) zumindest teilweise aufnimmt;
eine gleitende Kupplung (38), die zwischen dem ersten Antriebswellen-Element (34) und dem zweiten Antriebswellen-Element (36) angeordnet ist;
**dadurch gekennzeichnet, dass**
die gleitende Kupplung (38) ein erstes Ende, das mit dem ersten Antriebswellen-Element (34) gekoppelt ist, und ein zweites Ende mit einer Verriegelungsfunktion (66), um mechanisch mit der inneren Ausnehmung (62) des zweiten Antriebswellen-Elements (36) gekoppelt zu werden, aufweist, um selektiv eine Antriebskraft zwischen den beiden Antriebswellen-Elementen (34, 36) zu übertragen.

2. Die Antriebswelle gemäß Anspruch 1, wobei das erste Antriebswellen-Element (34) die Antriebskraft empfängt, sodass die gleitende Kupplung (38) mechanisch die ersten und zweiten Antriebswellen-Elemente (34, 36) in der ausgefahrenen Position verbindet und die Antriebskraft überträgt, sodass das erste Antriebswellen-Element (34), das zweite Antriebswellen-Element (36) und die gleitende Kupplung (38) zusammen rotieren, und wobei die gleitende Kupplung (38) die mechanische Verbindung zwischen dem ersten und zweiten Antriebswellen-Element (34, 36) in der eingefahrenen Position trennt und die Antriebskraft aussetzt, sodass das erste Antriebswellen-Element (34) und die gleitende Kupplung (38) gemeinsam rotieren, wobei das zweite Antriebswellen-Element (36) nicht mit ihnen rotiert.

3. Die Antriebswelle gemäß Anspruch 1 oder 2, wobei die innere Ausnehmung (62) das erste Antriebswellen-Element (34) und die gleitende Kupplung (38) zumindest teilweise aufnimmt und die innere Ausnehmung (62) des zweiten Antriebswellen-Elements (36) eine Verriegelungsfunktion (64) aufweist, sodass die Verriegelungsfunktion (66) des zweiten Endes der gleitenden Kupplung (38) mechanisch und selektiv mit der Verriegelungsfunktion (64) der inneren Ausnehmung (62) des zweiten Antriebswellen-Elements (36) in Eingriff tritt.

4. Die Antriebswelle gemäß Anspruch 3, wobei die Verriegelungsfunktion (64) der inneren Ausnehmung (62) in Form von Laschen (64) ausgebildet ist.

5. Die Antriebswelle gemäß Anspruch 4, wobei die Verriegelungsfunktion (66) der gleitenden Kupplung (38) in Form von Zähnen (66) ausgebildet ist.

6. Die Antriebswelle gemäß Anspruch 5, wobei das zweite Antriebswellen-Element (36) und die gleitende Kupplung (38) sich axial zueinander verschieben, sodass die Verriegelungsfunktion (66) der gleitenden Kupplung (38) axial auf den Laschen (64) des zweiten Antriebswellen-Elements (36) gleitet, um die erste und zweite Antriebswelle (34, 36) mechanisch zu koppeln, und die Zähne (66) axial aus und beabstandet von den Laschen (64) des zweiten Antriebswellen-Elements (36) herausgleiten, jedoch innerhalb der inneren Ausnehmung (62) des zweiten Antriebswellen-Elements (36) verbleiben, um die erste und zweite Antriebswelle (34, 36) mechanisch zu entkoppeln.

7. Die Antriebswelle gemäß einem der vorhergehenden Ansprüche, wobei die gleitende Kupplung (38) als Hülse (38) ausgebildet ist, die zusätzlich einen mittleren Abschnitt umfasst, der zwischen dem ersten und zweiten Ende angeordnet ist, und eine innere Ausnehmung (68) aufweist, die zumindest einen Teil des ersten Antriebswellen-Elements (34) aufnimmt.

8. Die Antriebswelle gemäß Anspruch 7, wobei der mittlere Abschnitt der gleitenden Kupplung (38) selektiv die innere Ausnehmung (62) des zweiten Antriebswellen-Elements (36) berührt, um als mechanischer Anschlag zu fungieren und zu verhindern, dass sich die gleitende Kupplung (38) weiter nach außen in der inneren Ausnehmung (62) des zweiten Antriebswellen-Elements (36) bewegt.

9. Die Antriebswelle gemäß einem der vorhergehenden Ansprüche, ferner umfassend ein Spannungselement (50), das zwischen dem zweiten Ende der gleitenden Kupplung (38) und der inneren Ausnehmung (62) des zweiten Antriebswellen-Elements (36) angeordnet ist, wobei das Spannungselement (50) die gleitende Kupplung (38) spannt, um die erste und zweite Antriebswelle (34, 36) mechanisch zu koppeln.

10. Die Antriebswelle gemäß Anspruch 9, wobei das Spannungselement (50) eine Feder (50) ist.

11. Die Antriebswelle gemäß einem der Ansprüche 9 oder 10, ferner umfassend einen Führungsstift (48), der zwischen dem zweiten Ende der gleitenden Kupplung (38) und der inneren Ausnehmung (62) des zweiten Antriebswellen-Elements (36) angeordnet ist, wobei der Führungsstift (48) konzentrisch mit dem Spannungselement (50) ist.

12. Die Antriebswelle gemäß einem der Ansprüche 9 bis 11, ferner umfassend ein Axiallager (52), das zwischen dem Spannungselement (50) und dem zweiten Ende der gleitenden Kupplung (38) angeordnet ist.

13. Die Antriebswelle gemäß einem der vorhergehenden Ansprüche, ferner umfassend einen ersten äußeren Sicherungsring (56), der zwischen dem ersten Antriebswellen-Element (34) und dem ersten Ende der gleitenden Kupplung (38) verbunden ist, und einen zweiten äußeren Sicherungsring (56), der zwischen dem zweiten Antriebswellen-Element (36) und der gleitenden Kupplung (38) verbunden ist.

14. Die Antriebswelle gemäß einem der vorhergehenden Ansprüche, ferner umfassend eine mechanische Anschlagscheibe (58) zwischen dem ersten Antriebswellen-Element (34) und dem ersten Ende der gleitenden Kupplung (38) und einem zweiten äußeren Sicherungsring (56), der zwischen dem zweiten Antriebswellen-Element (36) und der gleitenden Kupplung (38) verbunden ist.

15. Ein Fahrzeug, umfassend eine Antriebswelle (32) gemäß einem der vorhergehenden Ansprüche und ein Hebe-Element (30), das mit der zweiten Achse (24) funktionell verbunden ist, um diese anzuheben oder abzusenken, wobei die Antriebswelle (32) eingerichtet ist eine variable Länge aufzuweisen, sodass die ersten und zweiten Antriebswellen-Elemente (34, 36) relativ zueinander zwischen einer ausgefahrenen Position, in der die Länge der zweite Achse (24) ausgefahrenen ist und die zweite Achse (24) ungefähr auf Höhe der ersten Achse (22) ist, und einer eingefahrenen Position, in der die Länge der Antriebswelle (32) eingefahren ist und die zweite Achse (24) in Relation zur ersten Achse (22) angehoben ist, verschiebbar sind, und wobei die gleitende Kupplung (38) automatisch die erste und zweite Antriebswelle (34, 36) in der ausgefahrenen Position verbindet und in der eingefahrenen Position trennt.

## Revendications

1. Arbre d'entraînement (32) pour un véhicule (10) avec un premier essieu (22) et un second essieu (24) qui se relève dans lequel l'arbre d'entraînement (32) comprend :
un premier élément d'arbre d'entraînement (34) configuré pour être relié au premier essieu (22) ;
un second élément d'arbre d'entraînement (36) configuré pour être relié au second essieu (24), dans lequel le second élément d'arbre d'entraînement (36) a un évidement intérieur (62) qui abrite au moins partiellement le premier élément d'arbre d'entraînement (34) ; et
un dispositif d'accouplement coulissant (38) relié entre le premier élément d'arbre d'entraînement (34) et le second élément d'arbre d'entraînement (36),
**caractérisé par le fait que** :
le dispositif d'accouplement coulissant (38) a une première extrémité qui est accouplée au premier élément d'arbre d'entraînement (34) et une seconde extrémité avec une fonction de verrouillage (66) pour être accouplée mécaniquement à l'évidement intérieur (62) du second élément d'arbre d'entraînement (36), afin de transmettre de manière sélective une force d'entraînement entre les premier et second éléments d'arbre d'entraînement (34, 36).

2. Arbre d'entraînement selon la revendication 1, dans lequel le premier élément d'arbre d'entraînement (34) reçoit la force d'entraînement de façon à ce que le dispositif d'accouplement coulissant (38) accouple mécaniquement les premier et second éléments d'arbre d'entraînement (34, 36) ensemble dans la position étendue et transmet la force d'entraînement de façon à ce que le premier élément d'arbre d'entraînement (34), le second élément d'arbre d'entraînement (36) et le dispositif d'accouplement coulissant (38) tournent ensemble en tandem, et le dispositif d'accouplement coulissant (38) désolidarise mécaniquement les premier et second éléments d'arbre d'entraînement (34, 36) dans la position rétractée et arrête de transmettre la force d'entraînement de façon à ce que le premier élément d'arbre d'entraînement (34) et le dispositif d'accouplement coulissant (38) tournent ensemble mais que le second élément d'arbre d'entraînement (36) ne tourne pas avec eux.

3. Arbre d'entraînement selon la revendication 1 ou 2, dans lequel l'évidement intérieur (62) abrite au moins partiellement le dispositif d'accouplement coulissant (38) et le premier élément d'arbre d'entraînement (34), et l'évidement intérieur (62) du second élément d'arbre d'entraînement (36) comprend une fonction de verrouillage (64) de telle sorte que la fonction de verrouillage (66) de la seconde extrémité du dispositif d'accouplement coulissant (38) vienne en prise mécaniquement et de manière sélective avec la fonction de verrouillage (64) de l'évidement intérieur (62) du second élément d'arbre d'entraînement (36).

4. Arbre d'entraînement selon la revendication 3, dans lequel la fonction de verrouillage (64) de l'évidement intérieur (62) se présente sous la forme de pattes (64).

5. Arbre d'entraînement, selon la revendication 4, dans lequel la fonction de verrouillage (66) du dispositif d'accouplement coulissant (38) se présente sous la forme de dents (66).

6. Arbre d'entraînement selon la revendication 5, dans lequel le second élément d'arbre d'entraînement (36) et le dispositif d'accouplement coulissant (38) coulissent axialement l'un par rapport à l'autre de façon à ce que la fonction de verrouillage (66) du dispositif d'accouplement coulissant (38) coulisse axialement sur les pattes (64) du second élément d'arbre d'entraînement (36) pour accoupler mécaniquement les premier et second éléments d'arbre d'entraînement (34, 36) et les dents (66) coulissent axialement hors et à distance des pattes (64) du second élément d'arbre d'entraînement (36) mais restent dans l'évidement intérieur (62) du second élément d'arbre d'entraînement (36) pour désaccoupler mécaniquement les premier et second éléments d'arbre d'entraînement (34, 36).

7. Arbre d'entraînement selon l'une quelconque des revendications précédentes, dans lequel le dispositif d'accouplement coulissant (38) se présente sous la forme d'un manchon (38) qui comprend en plus une section intermédiaire reliée entre la première extrémité et la seconde extrémité et un évidement intérieur (68) qui reçoit au moins une partie du premier élément d'arbre d'entraînement (34).

8. Arbre d'entraînement selon la revendication 7, dans lequel la section intermédiaire du dispositif d'accouplement coulissant (38) entre en contact de manière sélective avec l'évidement intérieur (62) du second élément d'arbre d'entraînement (36) pour réaliser une fonction d'une butée mécanique pour empêcher le dispositif d'accouplement coulissant (38) de coulisser davantage vers l'extérieur dans l'évidement intérieur (62) du second élément d'arbre d'entraînement (36).

9. Arbre d'entraînement selon l'une quelconque des revendications précédentes, comprenant en outre un élément de tension (50) relié entre la seconde extrémité du dispositif d'accouplement coulissant (38) et l'évidement intérieur (62) du second élément d'arbre d'entraînement (36), et l'élément de tension (50) serre le dispositif d'accouplement coulissant (38) pour accoupler mécaniquement les premier et second éléments d'arbre d'entraînement (34, 36).

10. Arbre d'entraînement selon la revendication 9, dans lequel l'élément de tension (50) est un ressort (50).

11. Arbre d'entraînement, selon l'une quelconque des revendications 9 ou 10, comprenant en outre une goupille de guidage (48) reliée entre la seconde extrémité du dispositif d'accouplement coulissant (38) et l'évidement intérieur (62) du second élément d'arbre d'entraînement (36), et la goupille de guidage (48) est concentrique avec l'élément de tension (50).

12. Arbre d'entraînement, selon l'une quelconque des revendications 9 à 11, comprenant en outre un palier axial (52) relié entre l'élément de tension (50) et la seconde extrémité du dispositif d'accouplement coulissant (38).

13. Arbre d'entraînement selon l'une quelconque des revendications précédentes, comprenant en outre une première bague de retenue externe (56) reliée entre le premier élément d'arbre d'entraînement (34) et la première extrémité du dispositif d'accouplement coulissant (38) et une seconde bague de retenue externe (56) reliée entre le second élément d'arbre d'entraînement (36) et le dispositif d'accouplement coulissant (38).

14. Arbre d'entraînement selon l'une quelconque des revendications précédentes, comprenant en outre une rondelle d'arrêt mécanique (58) reliée entre le premier élément d'arbre d'entraînement (34) et la première extrémité du dispositif d'accouplement (38) et une seconde bague de retenue externe (56) connectée entre le second élément d'arbre d'entraînement (36) et le dispositif d'accouplement (38).

15. Véhicule comprenant un arbre d'entraînement (32) selon l'une quelconque des revendications précédentes et un élément de levage (30) relié de manière fonctionnelle au second essieu (24) pour soulever ou abaisser le second essieu (24), et l'arbre d'entraînement (32) est configuré pour avoir une longueur variable de façon à ce que les premier et second éléments d'arbre d'entraînement (34, 36) se déplacent l'un par rapport à l'autre entre une position étendue dans laquelle la longueur de l'arbre d'entraînement (32) est étendue et le second essieu (24) est à peu près au même niveau que le premier essieu (22), et une position rétractée dans laquelle la longueur de l'arbre d'entraînement (32) est rétractée et le second essieu (24) est soulevé par rapport au premier essieu (22), et le dispositif d'accouplement coulissant (38) met en prise automatiquement les premier et second éléments d'arbre d'entraînement (34, 36) dans la position étendue et désolidarise les premier et second éléments d'arbre d'entraînement (34, 36) dans la position rétractée.
